## Europäisches Patentamt
## European Patent Office
## Office européen des brevets

(19)

(11) Numéro de publication: **0 236 205**
**B1**

(12)

# FASCICULE DE BREVET EUROPEEN

(45) Date de publication du fascicule du brevet: **23.01.91**

(51) Int. Cl.⁵: **G 01 N 11/14**

(21) Numéro de dépôt: **87400338.7**

(22) Date de dépôt: **17.02.87**

(54) **Consistomètre d'analyse d'évolution rhéologique, notamment utilisable sur un chantier.**

(30) Priorité: **27.02.86 FR 8602701**

(43) Date de publication de la demande:
**09.09.87 Bulletin 87/37**

(45) Mention de la délivrance du brevet:
**23.01.91 Bulletin 91/04**

(84) Etats contractants désignés:
**DE IT NL SE**

(56) Documents cités:
**EP-A-0 094 319**
**US-A-3 435 666**
**US-A-4 175 425**
**US-A-4 466 276**
**US-A-4 534 209**

(73) Titulaire: **TOTAL Compagnie Française des Pétroles**
**5 rue Michel-Ange**
**F-75016 Paris (FR)**

(72) Inventeur: **Arnstein, Rodolphe**
**52 Boulevard Jean-Jaurès**
**F-92100 Boulogne Billancourt (FR)**
Inventeur: **Bisson, Patrick**
**10, Allée des Mimosas Le Mas Laurent**
**F-91940 Les Ulis (FR)**
Inventeur: **Blaquiere, Marc**
**10, rue de l'Etang**
**F-78470 Saint Remy les Chevreuse (FR)**

(74) Mandataire: **Ohayon, Joseph et al**
**CABINET BROT ET JOLLY 83, rue d' Amsterdam**
**F-75008 Paris (FR)**

Courier Press, Leamington Spa, England.

EP 0 236 205 B1

## Description

La présente invention concerne un consistomètre du type comprenant une enveloppe de forme générale cylindrique formant une enceinte de consistomètre, disposée verticalement et ouverte à sa partie supérieure, un bouchon supérieur adapté à être vissé sur cette partie supérieure pour la fermer, des moyens d'introduction d'un fluide sous pression dans ladite enceinte, un récipient allongé en forme de corps de révolution autour d'un axe, muni de moyens de fermeture à ses deux extrémités longitudinales, délimité partiellement par une membrane élastique et apte à être installé verticalement dans ladite enceinte et à recevoir une matière rhéologiquement évolutive, telle que du laitier de ciment, un agitateur à palettes prévu pour être placé dans ledit récipient et muni d'une tige d'entraînement, un palier d'arbre dans ledit moyen de fermeture de l'extrémité longitudinale inférieure du récipient pour le passage étanche de ladite tige, un équipement moteur disposé à l'extérieur de ladite enveloppe et prévu pour entraîner en rotation ladite tige et des moyens de mesure du couple d'entraînement de cette tige.

Un tel consistomètre est décrit dans le brevet européen no. 0 176 391 publié le 2 Avril 1986, et bénéficiant de la date de priorité du 31 Août 198 et qui illustre l'art antérieur selon l'article 54(3) CBE.

La pression du fluide qui est introduit dans l'enceinte est transmise à la matière rhéologiquement évolutive par la membrane élastique, tandis que lesdits moyens de mesure permettent l'étude de l'évolution rhéologique de cette matière.

Par les brevets EP—A—0 094 319, US—A—4 466 276 et US—A—4 534 209 on connaît des consistomètres fonctionnant sensiblement sur le même principe que le précédent.

Toutefois, tous ces consistomètres ont l'inconvénient de nécessiter des manipulations longues et donc coûteuses avant et après la période de mesure proprement dite. De plus, ils sont destinés à être installés dans les laboratoires mais ne conviennent pas à une utilisation sur un chantier.

Un objectif de la présente invention est de simplifier la réalisation de ces consistomètres pour en rendre l'utilisation universelle tout en conservant une bonne précision de mesure. Un autre objectif est de réduire la durée et, par suite, le coût des manipulations précédant et suivant la période de mesure proprement dite.

On a trouvé que ces objectifs pouvaient être atteints avec un ensemble de récipient fixe et d'agitateur rotatif se mettant automatiquement en position de travail dès qu'il est installé dans l'enceinte du consistomètre et se trouvant alors couplé sans contact mécanique à un équipement d'entraînement en rotation de l'agitateur et de mesure du couple d'entraînement extérieur à cette enceinte.

Pour cela, l'invention prévoit un consistomètre selon la revendication 1, ladite enveloppe et prévu pour entraîner en rotation ladite tige et des moyens de mesure du couple d'entraînement de cette tige, caractérisé en ce que ladite enveloppe comporte dans sa partie inférieure, un appendice dans lequel est disposé verticalement un arbre intermédiaire de transmission de mouvement de rotation qui est muni d'un organe récepteur de couple coopérant dans un système de transmission de couple du type magnétique avec un organe transmetteur de couple extérieur à l'appendice, entraîné par ledit équipement moteur et qui est mécaniquement lié à son extrémité supérieure à un dispositif mécanique d'accouplement prévu pour que l'extrémité inférieure de ladite tige s'engage dans ce dispositif par simple descente de ladite tige lors de la mise en place dudit récipient dans ladite enceinte de consistomètre et s'en dégage par simple remontée de ladite tige lors du retrait dudit récipient.

On évite ainsi toutes liaisons entre l'intérieur et l'extérieur de l'enceinte du consistomètre autres que les connexions fixes permettant l'introduction d'un fluide sous pression dans l'enceinte et le retrait de celui-ci. On n'a donc plus les difficultés d'étanchéité ni les frottements que créerait le passage d'un arbre à travers une paroi séparant un milieu à haute pression de l'ambiance. En outre, les moyens et les opérations de mise en service du récipient se trouvent simplifiés.

Le système de transmission de couple du type magnétique comprend, de préférence, un aimant permanent d'entraînement solidaire en rotation dudit équipement moteur, installé à l'extérieur de l'appendice et un aimant permanent entraîné solidaire en rotation dudit arbre intermédiaire, installé à l'intérieur de l'appendice.

Un ressort tendant à écarter verticalement ledit dispositif d'accouplement d'avec ledit arbre intermédiaire est, avantageusement, inséré entre ce dispositif d'accouplement et cet arbre intermédiaire pour compenser les variations de longueur de ladite tige, des moyens mécaniques d'engagement réciproque assurant par ailleurs la solidarisation en rotation du dispositif d'accouplement et de l'arbre intermédiaire.

Ledit dispositif d'accouplement peut notamment comprendre un logement vertical apte à recevoir ladite tige et muni latéralement d'un ergot sollicité de manière élastique vers l'intérieur de ce logement, tandis que ladite tige présente à son extrémité inférieure une rainure verticale dans laquelle ledit ergot peut s'engager.

Une simplification importante peut encore être obtenue en prévoyant que le moyen de fermeture de l'extrémité longitudinale supérieure dudit récipient est constitué par ledit bouchon supérieur, le récipient pouvant à cet effet comporter une virole extérieure qui peut être serrée contre ledit bouchon supérieur au moyen d'une bague de serrage se vissant intérieurement sur ce bouchon.

Ledit palier d'arbre est avantageusement rigidement porté par un bouchon inférieur apte à se visser à l'extrémité longitudinale inférieure dudit récipient, ce qui permet de remplir le récipient, en enlevant ce bouchon inférieur et en fixant le récipient au bouchon supérieur, l'ensemble récipient-bouchon supérieur étant renversé par rapport à la position devant être prise ensuite dans le consistomètre.

L'extrémité supérieure de ladite tige peut être tenue par un pivot ménagé dans ledit bouchon supérieur.

La membrane élastique ne doit pas compromettre la rigidité dudit récipient et elle doit notamment être désolidarisée des points d'appui de ladite tige. On peut avantageusement prévoir des lumières latérales dans ledit récipient et une membrane annulaire apte à s'appliquer avec serrage sur ledit récipient pour fermer ces lumières latérales.

On va décrire, à titre non limitatif, un exemple de réalisation de l'invention en se référant au dessin joint dans lequel:

la Fig. 1 représente, en élévation et coupe partielle, une vue d'ensemble d'un consistomètre;

la Fig. 2 est une vue en élévation, avec coupe de la partie inférieure, d'un récipient à matière rhéologiquement évolutive utilisé dans ce consistomètre; et la

la Fig. 3 est une vue en perspective de ce récipient.

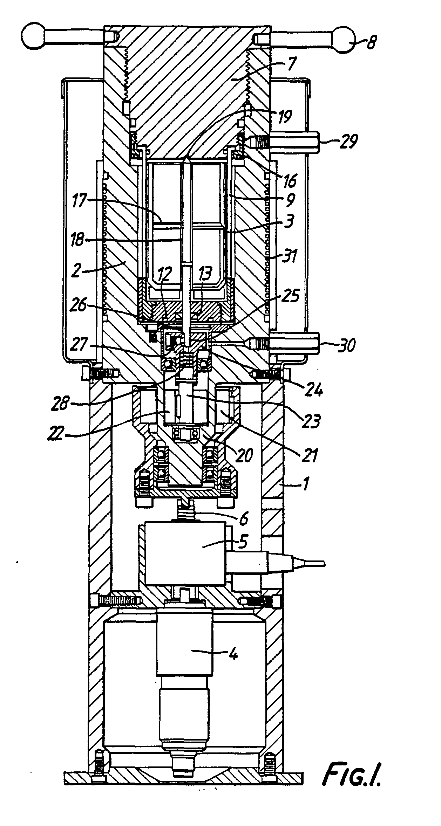

Le consistomètre représenté sur la Fig. 1 comprend un bâti 1 qui supporte une enveloppe 2 en un matériau non magnétique tel que par exemple de l'aluminium ou un alliage d'aluminium, délimitant intérieurement une enceinte de consistomètre 3 et qui abrite un moteur à réducteur de vitesse 4 entraînant par l'intermédiaire d'un couplemètre 5 un arbre moteur 6.

L'enceinte 3 est fermée à la partie supérieure par un bouchon supérieur 7 que l'on peut visser dans l'enveloppe 2 au moyen de poignées démontables 8.

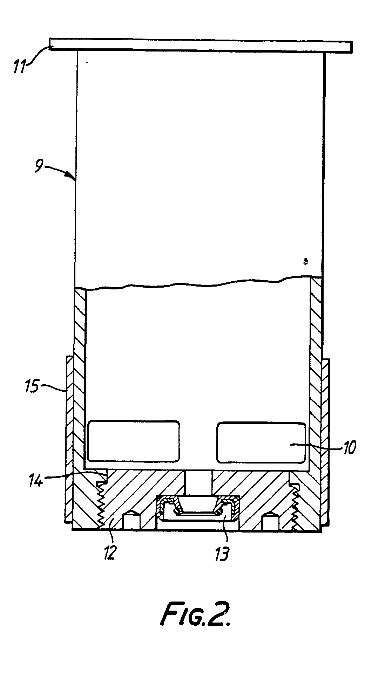

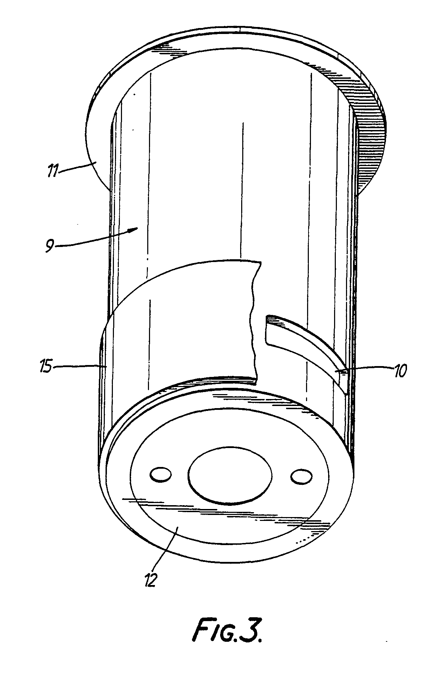

Ce bouchon supérieur porte le récipient à matière rhéologiquement évolutive 9, en alliage d'aluminium, que l'on voit mieux sur les Fig. 2 et 3. Ce récipient 9 a la forme d'un cylindre, par exemple d'un diamètre intérieur de 60 mm, dont la paroi latérale est pourvue de lumières 10, dont l'extrémité longitudinale supérieure porte une virole extérieure 11 et dont l'extrémité longitudinale inférieure est fermée par un bouchon inférieur 12. Ce bouchon 12 peut être vissé à l'intérieur de la paroi latérale du récipient 9, dans une portion renforcée de celle-ci. Ce bouchon 12 porte en son centre un joint d'arbre tournant 13, par exemple un joint PAULSTRA type IE. Un bon centrage du bouchon 12 et, par suite, du joint d'arbre 13 est obtenu par une portée 14 prévue en bout du filetage du bouchon, qui s'engage dans un évidement correspondant de la paroi du récipient 9.

Une bague cylindrique 15 en un élastomère tel que le produit vendu sous le nom de VITON, d'une épaisseur par exemple de 2 mm, est emmanchée sur la paroi latérale du récipient 9 pour fermer les lumières 10.

Le récipient 9 est fixé sur le bouchon supérieur 7 par un serrage de la virole 11 contre ce récipient au moyen d'une bague à vissage rapide 16, comme on le voit sur la Fig. 1. Le récipient 9 contient un agitateur 17 porté par une tige d'entraînement 18 qui traverse le joint d'arbre 13 et se prolonge vers le bas hors du récipient 9 et qui s'appuie à son extrémité supérieure sur un pivot 19 ménagé dans le bouchon supérieur 7.

L'enveloppe 2 se prolonge vers le bas par un appendice central 20. Extérieurement à cet appendice 20 et autour de celui-ci, est disposé un aimant permanent d'entraînement 21 lié en rotation à l'arbre moteur 6. A l'intérieur de l'appendice 20, et en face de l'aimant d'entraînement 21 est disposé un aimant permanent entraîné 22 solidaire en rotation d'un arbre de transmission intermédiaire 23 porteur d'un dispositif d'accouplement 24. L'appendice 20 sert de support de paliers pour ces deux aimants 21 et 22.

Le dispositif d'accouplement 24 comporte un logement 25 prévu pour recevoir l'extrémité inférieure de la tige 18. Celle-ci est munie latéralement d'une rainure verticale 26 dans laquelle peut pénétrer un ergot 27 porté par le dispositif d'accouplement 24 et poussé par un ressort vers l'intérieur du logement 25. Ainsi lorsqu'on introduit l'extrémité inférieure de la tige 18 dans le logement 25, l'ergot 27 pénètre dans la rainure 26. On a donc un encliquetage automatique par simple mise en place du bouchon supérieur 7 et du récipient 9 qui lui est fixé.

Un rattrapage de jeu vertical est prévu pour assurer le maintien de l'extrémité supérieure de la tige 18 dans le pivot 19. Pour cela, le dispositif d'accouplement 24 est lié en rotation à l'arbre intermédiaire 23 mais il peut se déplacer verticalement, un ressort 28 assurant la compensation de variations de longueur de la tige 18.

L'introduction d'un fluide sous pression dans l'enceinte 3 et le retrait de celui-ci s'effectuent au moyen de conduits 29 et 30. Le chauffage s'effectue au moyen d'un cordon chauffant 31 noyé à l'extérieur de l'enveloppe 2. On peut atteindre une pression de 1 000 bars et une température de 200°C.

Lorsqu'on veut effectuer un essai, on peut procéder de la manière suivante. On met l'agitateur 17 dans le récipient 9 et on fixe l'ensemble sur le bouchon supérieur 7 en vissant la bague 16 au moyen d'une clef spéciale. On emmanche la membrane 15 sur le récipient 9 en prenant soin de laisser une portée semblable de chaque côté des lumières 10, et on remplit le récipient 9, par exemple avec du laitier de ciment. On glisse le bouchon inférieur l2 sur la tige 18 en mettant la pointe de la tige 18 dans le pivot 19, puis on visse le bouchon inférieur 12 sur le récipient 9 à l'aide d'une clef spéciale. On prend alors l'ensemble du bouchon supérieur 7 et du récipient 9 qui lui est fixé et on l'introduit dans l'enceinte 3 du consistomètre. En vissant le bouchon supérieur 7 sur l'enveloppe 2 à l'aide des poignées 8, on met en position de travail le récipient 9 et la tige 18 dont l'extrémité inférieure s'engage dans le dispositif d'accouplement 24.

Pendant l'essai, l'agitateur 17 est entraîné à vitesse constante, par exemple à 150 tours/minute. La température et la pression peuvent être modifiées selon un programme; dans le cas d'un laitier de ciment pour puits de forage, ce programme est établi conformément aux normes API.

On enregistre la variation du couple d'entraînement mesuré par le couplemètre 5 comme une fonction du temps afin de déterminer le temps de prise du laitier. Au lieu d'utiliser le couplemètre 5, on pourrait aussi mesurer l'intensité du moteur 4, mais la mesure de la consistance du laitier ainsi effectuée serait moins précise.

**Revendications**

1. Consistomètre comprenant une enveloppe (2) de forme générale cylindrique formant une enceinte (3) de consistomètre, disposée verticalement et ouverte à sa partie supérieure, un bouchon supérieur (7) adapté à être vissé sur cette partie supérieure pour la fermer, des moyens (29, 30) d'introduction d'un fluide sous pression dans ladite enceinte (3), un récipient allongé (9) en forme de corps de révolution autour d'un axe, muni de moyens de fermeture (11, 12) à ses deux extrémités longitudinales, délimité partiellement par une membrane élastique (15) et apte à être installé verticalement dans ladite enceinte (3) et à recevoir une matière rhéologiquement évolutive, telle que du laitier de ciment, un agitateur à palettes (17) prévu pour être placé dans ledit récipient (9) et muni d'une tige d'entraînement (18), un palier d'arbre (13) dans ledit moyen de fermeture (12) de l'extrémité longitudinale inférieure du récipient pour le passage étanche de ladite tige (18), un équipement moteur (4) disposé à l'extérieur de ladite enveloppe (2) et prévu pour entraîner en rotation ladite tige (18) et des moyens de mesure (5) du couple d'entraînement de cete tige (18), ladite enveloppe (2) comportant, dans sa partie inférieure, un appendice creux (20) dans lequel est disposé verticalement un arbre intermédiaire (23) de transmission de mouvement de rotation qui est muni d'un organe récepteur de couple (22) coopérant, dans un système de transmission de couple du type magnétique, avec un organe transmetteur de couple (21) extérieur à l'appendice, et entraîné par ledit équipement moteur (4), ledit arbre intermédiaire étant mécaniquement lié à son extrémité supérieure à un dispositif mécanique d'accouplement (24) comprenant un logement vertical (25) apte à recevoir ladite tige (18) et muni latéralement d'un ergot (27) sollicité de manière élastique vers l'intérieur de ce logement, tandis que ladite tige (18) présente à son extrémité inférieure une rainure verticale (26) dans laquelle ledit ergot (27) peut s'engager lors de la mise en place du récipient (9) dans l'enceinte (3) de consistometre.

2. Consistomètre selon la revendication 1, caractérisé en ce que ledit système de transmission de couple du type magnétique comprend un aimant permanent d'entraînement (21) solidaire en rotation dudit équipement moteur (4), installé à l'extérieur de l'appendice (20) et un aimant permanent entraîné (22) solidaire en rotation dudit arbre intermédiaire (23), installé à l'intérieur de l'appendice (20).

3. Consistomètre selon la revendication 1, caractérisé en ce qu'un ressort (28) est inséré entre ledit dispositif d'accouplement (24) et ledit arbre intermédiaire (23) pour en permettre un déplacement relatif vertical tandis que le dispositif d'accouplement (24) et l'arbre intermédiaire (23) sont solidaires en rotation.

4. Consistomètre selon la revendication 1, caractérisé en ce que ledit récipient (9) comporte à sa partie supérieure une virole extérieure (11) apte à être serrée contre ledit bouchon supérieur (7) qui constitue ainsi ledit moyen de fermeture de l'extrémité longitudinale supérieure du récipient (9).

5. Consistomètre selon la revendication 4, caractérisé en ce que ledit moyen de fermeture de l'extrémité longitudinale inférieure du récipient (9) est un bouchon inférieur (12) apte à se visser sur le récipient (9).

6. Consistomètre selon la revendication 4, caractérisé en ce qu'un pivot (19) est ménagé dans ledit bouchon supérieur (7) pour recevoir l'extrémité supérieure de ladite tige (18).

7. Consistomètre selon la revendication 1, caractérisé en ce que ledit récipient (9) comporte des lumières latérales (10) et en ce que ladite membrane élastique (15) est une bague annulaire apte à s'appliquer avec serrage sur ledit récipient (9) pour en fermer les lumières latérales (10).

**Patentansprüche**

1. Konsistenzmeßvorrichtung mit einem im allgemeinen zylindrischen Behälter (2), der ein senkrecht angeordnetes, an seinem Oberteil offenes Gehäuse (3) für die Konsistenzmeßvorrichtung bildet und durch einen in den Oberteil einschraubbaren Deckel (7) verschließbar ist, mit Zuführungseinrichtungen (29, 30) für ein unter Druck stehendes Fluid in das Gehäuse (3), mit einem länglichen Gefäß (9) in Form eines einachsigen Rotationskörpers, der an beiden Längsenden Verschlußmittel (11, 12) aufweist, teilweise durch eine elastische Membran (15) verschlossen und zum senkrechten Einbau in das Gehäuse (3) sowie zur Aufnahme eines sich in seinem Fließverhalten weiterentwickelnden Materials, z. B. einer Zementschlemme, vorgesehen ist, ferner mit einem in das Gefäß (9) einführbaren und eine Antriebswelle (18) aufweisenden Flügel-Rührwerk (17), einem in dem Verschlußmittel (12) am unteren Längsende des Gefäßes (9) angeordneten Wellenlager (13) zur abgedichteten Durchführung der Welle (18), sowie mit einem außerhalb des Behälters (2) angeordneten Motoraggregat (4) als Drehantrieb für die Welle (18) sowie eine Meßeinrichtung für das Antriebsmoment der Welle (18), wobei der Behälter (2) an seinem unteren Abschnitt eine hohle Verlängerung (20) aufweist, in der eine senkrechte Zwischenwelle (23) zur Übertragung der Drehbewegung angeordnet und mit einem Drehmoment-Aufnehmerorgan (22) versehen ist, das in einem magnetischen Drehmoment-Übertragungssystem mit einem außerhalb der Verlängerung (20) angeordneten, vom Motoraggregat (4) angetriebenen Drehmoment-Sendeorgan (21) zusammenwirkt, während die Zwischenwelle (23) mit ihrem oberen Ende an eine mechanische Kupplungsvorrichtung (24) angeschlossen ist, die eine senkrechte Aufnahme (25) für die Welle (18) und einen seitlichen, gegen das Innere der Aufnahme federnd vorgespannten Zapfen (27) aufweist, der in eine am unteren Ende der Welle (18) befindliche senkrechte Nut (26) einzudringen in der Lage ist, sobald das Gefäß (9) in das Gehäuse (3) der Konsistenzmeßvorrichtung eingesetzt ist.

2. Konsistenzmeßvorrichtung nach Anspruch 1, dadurch gekennzeichnet, daß das magnetische Drehmoment-Übertragungssystem einen treibenden Permanentmagnet (21) aufweist und mit dem außerhalb der Verlängerung (20) angebrachten Motoraggregat (4) drehfest verbunden ist, während ein getriebener Permanentmagnet (22) drehfest mit der Zwischenwelle (23) in Verbindung steht, die im Inneren der Verlängerung (20) angeordnet ist.

3. Konsistenzmeßvorrichtung nach Anspruch 1, dadurch gekennzeichnet, daß eine Feder (28) zwischen der Kupplungsvorrichtung (24) und der Zwischenwelle (23) eingefügt ist, um bei gegenseitiger drehfester Verbindung deren relative Längsbewegungen zu ermöglichen.

4. Konsistenzmeßvorrichtung nach Anspruch 1, dadurch gekennzeichnet, daß das Gefäß (9) an seinem oberen Abschnitt einen äußeren Rand (11) trägt, der durch den oberen Deckel (7) eingespannt werden kann und so das Verschlußmittel am oberen Längsende des Gefäßes (9) bildet.

5. Konsistenzmeßvorrichtung nach Anspruch 4, dadurch gekennzeichnet, daß das Verschlußmittel am unteren Längsende des Gefäßes (9) aus einem mit dem Gefäß (9) verschraubbaren unteren Deckel (12) besteht.

6. Konsistenzmeßvorrichtung nach Anspruch 4, dadurch gekennzeichnet, daß in dem oberen Deckel (7) ein Zapfenlager (19) angeordnet ist, um das Ende der Welle (18) aufzunehmen.

7. Konsistenzmeßvorrichtung nach Anspruch 1, dadurch gekennzeichnet, daß das Gefäß (9) seitliche Öffnungen (10) enthält, und daß die elastische Membran (15) eine ringförmige Hülse ist, die mit Spannung an das Gefäß (9) angelegt werden kann, um die seitlichen Öffnungen (10) zu verschließen.

**Claims**

1. Consistometer comprising a case (2) of a general cylindrical shape forming a consistometer enclosure (3) disposed vertically and open at its upper part, an upper plug (7) adapted to be screwed on this upper part for closing it, means (29, 30) for introducing a pressurized fluid into said enclosure (3), an elongate container (9) in the form of a body of revolution about an axis, with closure means (11, 12) at both its longitudinal ends, defined partially by a resilient membrane (15) and adapted to be installed vertically in said enclosure (3) and to receive a rheologically evolutive material, such as cement slurry, a stirrer with fins (17) provided for positioning in said container (9) and having a drive rod (18), a shaft bearing (13) in said means (12) closing the lower longitudinal end of the container for sealingly passing said rod (18) therethrough, drive equipment (4) disposed outside said case (23) and provided for rotating said rod (18) and means (5) for measuring the drive torque of this rod (18), said case (2) comprising in its lower part a hollow appendix (20) in which an intermediate shaft (23) is disposed vertically for transmitting the rotational movement which is provided by a torque receiving member (22) cooperating, in the torque transmission system of the magnetic type, with a torque transmitting member (21) outside the appendix, and driven by said drive equipment (4), said intermediate shaft being connected mechanically at its upper end to a mechanical coupling device (24) comprising a vertical housing (25) adapted for receiving said rod (18) and having laterally a stud (27) urged resiliently inwardly of this housing, whereas said rod (18) has at its lower end a vertical groove (26) in which said stud (27) may be engaged when the container (9) is positioned in the consistometer enclosure (3).

2. Consistometer according to claim 1, characterized in that the torque transmission system of magnetic type comprises a permanent drive magnet (21) fast for rotation with said drive equipment (4), installed outside the appendix (20) and a driven permanent magnet (22) fast for rotation with said intermediate shaft (23) installed inside the appendix (20).

3. Consistometer according to claim 1, characterized in that a spring (28) is inserted between said coupling device (24) and said intermediate shaft (23) so as to allow relative vertical movement thereof while the coupling device (24) and the intermediate shaft (23) are interlocked for rotation.

4. Consistometer according to claim 1, characterized in that said container (9) comprises at its upper part an external collar (11) adapted to be clamped against said upper plug (7) which thus forms said means for closing the upper longitudinal end of the container (9).

5. Consistometer according to claim 4, characterized in that said means for closing the lower longitudinal end of the container (9) is a lower plug (12) adapted to be screwed on the container (9).

6. Consistometer according to claim 4, characterized in that a pivot (19) is formed in said upper plug (7) for receiving the upper end of said rod (18).

7. Consistometer according to claim 1, characterized in that said container (9) comprises lateral apertures (10) and in that said resilient membrane (15) is an annular ring adapted to be applied with clamping on said container (9) for closing the lateral apertures (10) thereof.

*FIG.I.*

FIG.2.

Fig.3.